# EUROPEAN PATENT SPECIFICATION

(11) **EP 4 414 741 B1**
(45) Date of publication and mention of the grant of the patent: **15.04.2026**
(21) Application number: 21961935.0
(22) Date of filing: 29.10.2021
(51) Int. Cl.: G01S 7/481, G01S 17/931, B60S 1/56, B60S 1/52, G01S 7/497, B60S 1/34, B08B 3/02, B08B 13/00

(54) **LASER RADAR DEVICE, CLEANING METHOD, AND VEHICLE**
LASERRADARVORRICHTUNG, REINIGUNGSVERFAHREN UND FAHRZEUG
DISPOSITIF RADAR LASER, PROCÉDÉ DE NETTOYAGE ET VÉHICULE

(43) Date of publication of application: 14.08.2024
(73) Proprietor: Shenzhen Yinwang Intelligent Technologies Co., Ltd., Shenzhen, Guangdong 518129 (CN)
(72) Inventor: FANG, Qun, Shenzhen, Guangdong 518129 (CN); WEI, Hao, Shenzhen, Guangdong 518129 (CN); PENG, Xu, Shenzhen, Guangdong 518129 (CN); FENG, Xiangbing, Shenzhen, Guangdong 518129 (CN); HUANG, Bolin, Shenzhen, Guangdong 518129 (CN)
(74) Representative: Maiwald GmbH
(86) International application number: PCT/CN2021/127674
(87) International publication number: WO 2023/070583

(56) References cited:
- WO-A1-2020/106936
- CN-A- 110 586 578
- CN-A- 111 429 400
- CN-A- 113 376 581
- DE-A1- 102018 217 488
- DE-A1- 102019 103 044
- US-A1- 2020 108 801
- US-A1- 2020 180 569
- US-A1- 2021 223 374

## Description

### TECHNICAL FIELD

Embodiments of this application relate to the sensor field, and more specifically, to a lidar device, a lidar cleaning method, and a vehicle.

### BACKGROUND

During use of lidar, a window of the lidar is easily blocked by dirt, dust, or leaves in an environment. Consequently, detection performance of the lidar deteriorates or the lidar is ineffective. These shielding objects attached to the window are usually removed by spraying water or air. Water spray cleaning systems include two solutions: fixed nozzle and movable nozzle. The fixed nozzle has a simple structure, but has a large volume and a poor cleaning effect. Although the movable nozzle can scan and cover the window to achieve a good cleaning effect, the nozzle system is complex and has a short service life.

In practical application, a fixed program of the cleaning system is performed to clean the lidar, regardless of whether the fixed nozzle or the movable nozzle is used. Once a fixed program cleaning mode is started, the entire lidar window is cleaned. In a cleaning process, the cleaning mode takes fixed duration and a fixed quantity of cleaning agent, which is inefficient and causes a waste of resources.

US 2020/108801 A1 discloses systems, apparatus, and methods to remove vehicle sensor debris. DE 10 2018 217 488 A1 describes an optical system, in particular a LiDAR system, comprising a primary optical sensor which is protected against environmental influences by an optically transparent protective cover.

DE 10 2019 103 044 A1 describes a headlight of a motor vehicle, which has a housing with a light exit opening closed by a transparent cover plate and at least one light module arranged in the housing for generating a light distribution of the headlight in front of the vehicle. The light module has at least one light source for emitting light in a wavelength range visible to the human eye to generate the light distribution.

### SUMMARY

Embodiments of this application provide a lidar device, a lidar cleaning method, and a vehicle, so that targeted cleaning can be performed based on a location of a shielding object on a lidar window, which improves efficiency of cleaning the lidar window and reduces a waste of resources. According to the invention as defined in claim 1, a lidar device is provided. The lidar device includes a cleaning apparatus and a control unit. The control unit determines a to-be-cleaned area of a lidar window based on location information of a shielding object on the lidar window, and controls the cleaning apparatus to clean the to-be-cleaned area of the lidar window.

The to-be-cleaned area of the lidar window is determined based on the location information of the shielding object on the lidar window, and the cleaning apparatus is controlled to perform specific area cleaning on the to-be-cleaned area. The to-be-cleaned area of the lidar window is determined based on the location information of the shielding object on the lidar window, and the cleaning apparatus is controlled to perform specific area cleaning on the to-be-cleaned area. In comparison with a full cleaning mode in a conventional fixed mode, in this embodiment of this application, the shielding object can be cleaned in a targeted manner, which improves cleaning efficiency of the lidar window and reduces a waste of resources.

Specifically, a conventional lidar cleaning apparatus may only be used to clean the lidar window in a whole range through a fixed program. In the full cleaning mode, once the mode is started, it takes fixed duration and a fixed quantity of cleaning agent. However, in most cases, the shielding object may occupy only a small range of the lidar window. In this case, the shielding object affects the lidar signal and still needs to be cleaned. If the lidar is still cleaned in a large range, efficiency is low. In addition, because the lidar cannot work during cleaning, a working gap of the lidar is prolonged, which brings a safety risk to driving of the vehicle. In another aspect, resources are wasted, and the cleaning agent is overused. In this embodiment of this application, targeted cleaning may be performed only on a part of an area (for example, the to-be-cleaned area) related to the shielding object on the lidar window, so that cleaning efficiency of the cleaning apparatus can be improved, the working gap of the lidar caused by window cleaning can be shortened as much as possible, and only a small quantity of cleaning agent is required, which reduces a waste of resources.

With reference to the first aspect, in some implementations of the first aspect, the location information of the shielding object on the lidar window includes a coordinate range of the shielding object on the lidar window. The control unit determines a coordinate range of the to-be-cleaned area based on the coordinate range of the shielding object on the lidar window.

A shape of the shielding object is generally irregular. The location information of the shielding object and the to-be-cleaned area are determined based on the coordinate range, which may simplify processing and facilitate operation of the cleaning apparatus, to improve the cleaning efficiency of the lidar window.

For example, the coordinate range may refer to an upper limit and a lower limit of coordinate values occupied by the shielding object or the to-be-cleaned area in a specific coordinate system. For example, in a rectangular coordinate system [X, Y], the coordinate range may be [X1, X2], [Y1, Y2], or a combination thereof, where X1<X2 and Y1<Y2. [X1, X2] is used as an example. X1 may be a minimum X coordinate value of the range occupied by the shielding object/the to-be-cleaned area, and X2 may be a maximum X coordinate value of the range occupied by the shielding object/the to-be-cleaned area. For another example, in an angular coordinate system [r, θ], the coordinate range may be [r1, r2], [θ1, θ2], or a combination thereof, where r1<r2 and θ1<θ2. It should be understood that a specific form of the coordinate range of the shielding object and the coordinate range of the to-be-cleaned area is not limited in this application.

With reference to the first aspect, in some implementations of the first aspect, the coordinate range of the to-be-cleaned area is greater than or equal to the coordinate range of the shielding object on the lidar window.

In this embodiment of this application, the coordinate range of the determined to-be-cleaned area may be greater than or equal to the coordinate range of the shielding object on the lidar window based on an actual cleaning requirement. For example, the coordinate range of the to-be-cleaned area may be basically equal to the coordinate range of the shielding object on the lidar window, to implement cleaning on the lidar window in a targeted manner. For another example, the cleaning area of the cleaning apparatus may also be appropriately expanded, so that the coordinate range of the to-be-cleaned area is slightly greater than the coordinate range of the shielding object on the lidar window, to further improve a cleaning effect.

With reference to the first aspect, in some implementations of the first aspect, the lidar device further includes a detection unit, and the detection unit may obtain location information of the shielding object on the lidar window.

In this embodiment of this application, the detection unit may be located in a lidar body inside the lidar device and connected to the control unit through a signal cable, or may be located outside the lidar body and connected to the control unit through a signal cable.

According to the invention, the cleaning apparatus further includes a nozzle, a screw rod, a motor, and a guide rail, where the motor is rotatably disposed on the screw rod, to drive the nozzle to move along a defined track of the guide rail.

The cleaning apparatus uses a combined structure of the motor, the screw rod, and the guide rail, so that the nozzle can perform scanning motion along the lidar window, and a structure of the cleaning system is more compact.

The control unit determines a motor parameter based on the coordinate range of the shielding object on the lidar window. The control unit controls, based on the motor parameter, the motor to rotate and drives the nozzle to clean the to-be-cleaned area of the lidar window.

In this embodiment of this application, the control unit may determine the motor parameter based on the coordinate range of the shielding object on the lidar window, control, based on the motor parameter, the motor to rotate, and drive the nozzle to clean the lidar window. In this manner, cleaning can be performed in a targeted manner, to improve the cleaning efficiency of the lidar window.

The motor parameter includes a motor rotation angle or a motor rotation speed.

There may be a correspondence between the motor rotation angle and a location (for example, a coordinate location) of the nozzle. In other words, the nozzle may be positioned by adjusting the motor rotation angle.

It should be understood that the motor parameter is not limited in this embodiment of this application. The motor parameter may be any parameter indicating a status of the motor, for example, a rotation angle of the motor or a rotation speed of the motor. The motor parameter may be a specified specific value, or may be a specific value range, or the like.

With reference to the first aspect, in some implementations of the first aspect, when a quantity of times that the cleaning apparatus has continuously performed cleaning is less than a first threshold, the control unit controls the cleaning apparatus to perform cleaning.

In this embodiment of this application, the cleaning apparatus is controlled to perform cleaning only when the quantity of times that the cleaning has been continuously performed is less than the first threshold. In this manner, the quantity of times that the cleaning apparatus performs cleaning can be controlled, thereby improving running stability of the cleaning system.

It should be understood that, in this embodiment of this application, the first threshold may be a preset quantity of lidar cleaning times before cleaning starts, or may be a quantity of times that the shielding object needs to be cleaned in an actual cleaning process. The quantity of times that the cleaning has been continuously performed may refer to a quantity of times that the cleaning apparatus has continuously performed cleaning under the control of the control unit, or may refer to a quantity of times that execution has been continuously performed in an entire process from obtaining the location information of the shielding object to controlling the cleaning apparatus to perform cleaning.

With reference to the first aspect, in some implementations of the first aspect, when a quantity of times that the cleaning apparatus has continuously performed cleaning is greater than the first threshold, a transceiver unit sends an alarm signal to a cockpit controller, where the alarm signal is used to request manual intervention.

In this embodiment of this application, when the quantity of times that the cleaning has been continuously performed is greater than the first threshold, the lidar device sends the alarm signal to the cockpit controller, to request manual intervention. In this manner, when the quantity of times that the cleaning has been continuously performed is large, it indicates that a common cleaning method of the cleaning apparatus may not effectively clean the shielding object. In this case, manual intervention is required. In this way, the running stability of the cleaning system can be improved, and the cleaning efficiency of the lidar is improved.

With reference to the first aspect, in some implementations of the first aspect, when duration for which the cleaning apparatus continuously performs cleaning is shorter than a second threshold, the control unit controls the cleaning apparatus to clean the to-be-cleaned area of the lidar window. In this embodiment of this application, the cleaning apparatus is controlled to perform cleaning only when the duration for which the cleaning apparatus continuously performs cleaning is shorter than the second threshold. In this manner, the cleaning duration of the cleaning apparatus can be controlled, thereby improving the running stability of the cleaning system.

It should be understood that, in this embodiment of this application, the second threshold may be preset lidar cleaning duration before cleaning starts, or may be lidar cleaning duration that the shielding object needs to be cleaned in an actual cleaning process.

With reference to the first aspect, in some implementations of the first aspect, when the duration for which the cleaning apparatus continuously performs cleaning is longer than the second threshold, the control unit controls the nozzle to move to an end of the guide rail, where the end of the guide rail is located outside a visible range of the lidar window.

In this embodiment of this application, when the duration of cleaning is longer than the second threshold, the control unit controls the nozzle to move to the end of the guide rail. Because the end of the guide rail is located outside the visible range of the lidar window, the nozzle may be in a hidden state relative to the lidar window. In this manner, the nozzle can be prevented from being directly exposed to the environment after the cleaning apparatus performs cleaning, which prolongs a service life of the nozzle.

With reference to the first aspect, in some implementations of the first aspect, the lidar device further includes a lidar body, where the lidar body includes a controller area network interface, and the cleaning apparatus further includes a water pump control module and a motor drive module. The controller area network interface is connected to the water pump control module and/or the motor drive module through a controller area network bus.

In this embodiment of this application, the lidar body controls the motor drive module and the water pump control module through the controller area network interface (CAN interface), to control the motor and the water pump to work. In this way, the cleaning apparatus can be directly controlled by the lidar body, which avoids adaptation between the cleaning system and a third-party controller. For a lidar user, cable routing in a vehicle body can be reduced, and software tuning duration can be reduced.

According to the invention as defined in claim 9, a lidar cleaning method is provided. The method includes: obtaining location information of a shielding object on a lidar window; determining a to-be-cleaned area of the lidar window based on the location information of the shielding object on the lidar window; and controlling a cleaning apparatus to clean the to-be-cleaned area of the lidar window.

The location information of the shielding object on the lidar window includes a coordinate range of the shielding object on the lidar window. The determining a to-be-cleaned area based on the location information of the shielding object on the lidar window includes: determining a coordinate range of the to-be-cleaned area based on the coordinate range of the shielding object on the lidar window.

With reference to the second aspect, in some implementations of the second aspect, the coordinate range of the to-be-cleaned area is greater than or equal to the coordinate range of the shielding object on the lidar window.

According to the invention, the method further includes: determining a motor parameter based on the coordinate range of the shielding object on the lidar window; and controlling, based on the motor parameter, a motor to rotate and driving the cleaning apparatus to clean the to-be-cleaned area of the lidar window.

The motor parameter includes a motor rotation angle or a motor rotation speed.

With reference to the second aspect, in some implementations of the second aspect, the controlling a cleaning apparatus to clean the to-be-cleaned area of the lidar window includes: when a quantity of times that the cleaning apparatus has continuously performed cleaning is less than a first threshold, controlling the cleaning apparatus to perform cleaning.

With reference to the second aspect, in some implementations of the second aspect, the method further includes: when a quantity of times that the cleaning apparatus has continuously performed cleaning is greater than a first threshold, sending an alarm signal, where the alarm signal is used to request manual intervention.

With reference to the second aspect, in some implementations of the second aspect, the controlling a cleaning apparatus to clean the to-be-cleaned area of the lidar window includes: when duration for which the cleaning apparatus continuously performs cleaning is shorter than a second threshold, controlling the cleaning apparatus to clean the to-be-cleaned area of the lidar window.

With reference to the second aspect, in some implementations of the second aspect, the method further includes: when duration for which the cleaning apparatus continuously performs cleaning is longer than a second threshold, controlling the cleaning apparatus to be located outside a visible range of the lidar window.

It should be understood that in this embodiment of this application, a manner of controlling the cleaning apparatus to be hidden outside the visible range of the lidar window is not limited. The hiding manner may be controlling the cleaning apparatus to move back to an initial position for hiding, or may be controlling the cleaning apparatus to move to a new location for hiding, or the like.

According to a third aspect, a lidar apparatus is provided. The apparatus includes at least one processor and a memory. The at least one processor is coupled to the memory, and is configured to read and execute instructions in the memory. The apparatus is configured to perform the methods in the foregoing aspects.

According to a fourth aspect, a computer-readable medium is provided, where the computer-readable medium stores program code. When the computer program code is run on a computer, the computer is enabled to perform the methods according to the foregoing aspects.

According to a fifth aspect, a chip is provided. The chip includes at least one processor and a memory. The at least one processor is coupled to the memory, and is configured to read and execute instructions in the memory. The apparatus is configured to perform the methods in the foregoing aspects.

According to a sixth aspect, an intelligent vehicle is provided. The vehicle includes at least one processor and a memory. The at least one processor is coupled to the memory, and is configured to read and execute instructions in the memory. The processor in the vehicle is configured to perform the methods in the foregoing aspects.

According to a seventh aspect, an intelligent vehicle is provided. The vehicle includes the device or the apparatus in the foregoing aspects.

### BRIEF DESCRIPTION OF DRAWINGS

FIG. 1 is a schematic functional diagram of a vehicle according to an embodiment of this application;
FIG. 2 is a schematic diagram 200 of an architecture of lidar and a cleaning apparatus of the lidar according to an embodiment of this application;
FIG. 3 is a schematic diagram of a cleaning apparatus 300 according to an embodiment of this application;
FIG. 4 is another schematic diagram of a cleaning apparatus 300 according to an embodiment of this application;
FIG. 5 is a schematic diagram of a lidar cleaning method 500 according to an embodiment of this application;
FIG. 6 is a schematic diagram of a lidar cleaning method 600 according to an embodiment of this application; and
FIG. 7 is a schematic diagram of a lidar apparatus 700 according to an embodiment of this application.

### DESCRIPTION OF EMBODIMENTS

The following describes technical solutions of this application with reference to accompanying drawings.

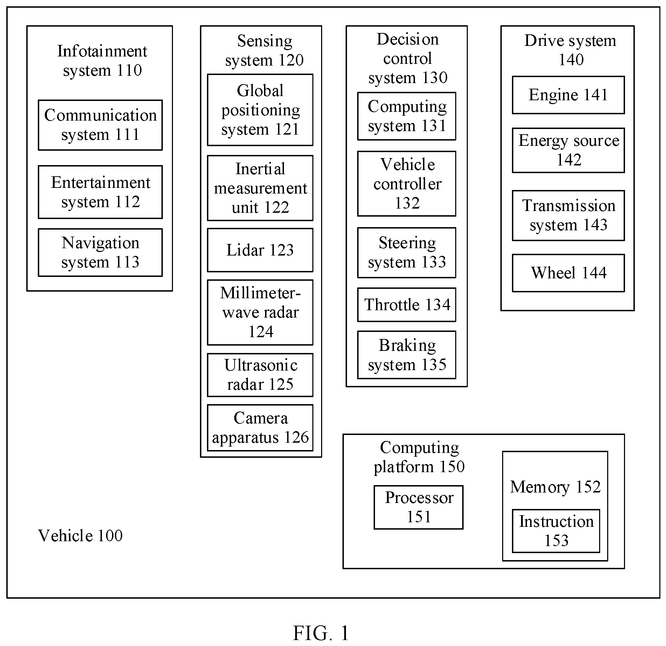

To facilitate understanding, an example scenario to which embodiments of this application are applicable is described below with reference to FIG. 1 by using an intelligent driving scenario as an example.

FIG. 1 is a schematic functional diagram of a vehicle 100 according to an embodiment of this application. The vehicle 100 may be configured to be in a full or partial automatic driving mode. For example, the vehicle 100 may obtain surrounding environment information of the vehicle 100 by using a sensing system 120, and obtain an automatic driving policy based on analysis of the surrounding environment information, to implement full automatic driving, or present an analysis result to a user, to implement partial automatic driving.

The vehicle 100 may include various subsystems, such as an infotainment system 110, the sensing system 120, a decision control system 130, a drive system 140, and a computing platform 150. Optionally, the vehicle 100 may include more or fewer subsystems, and each subsystem may include a plurality of components. In addition, each subsystem and component of the vehicle 100 may be connected to each other in a wired or wireless manner.

In some embodiments, the infotainment system 110 may include a communication system 111, an entertainment system 112, and a navigation system 113.

The communication system 111 may include a wireless communication system, and the wireless communication system may communicate with one or more devices in a wireless mode directly or through a communication network. For example, a wireless communication system 146 may perform communication through a 3G cellular network such as CDMA, EVD0, or GSM/GPRS, or perform communication through a 4G cellular network such as LTE. Alternatively, the wireless communication system may perform communication through 5G cellular network communication. The wireless communication system may communicate with a wireless local area network (wireless local area network, WLAN) by using Wi-Fi. In some embodiments, the wireless communication system 146 may directly communicate with a device by using an infrared link, Bluetooth, or ZigBee. For other wireless protocols, for example, various vehicle communication systems, such as the wireless communication system, may include one or more dedicated short-range communications (dedicated short-range communications, DSRC) devices, and these devices may include public and/or private data communication between a vehicle and another vehicle and/or a roadside station.

The entertainment system 112 may include a central control screen, a microphone, and a sound. A user may listen to a broadcast and play music in a vehicle based on the entertainment system. Alternatively, a mobile phone is connected to the vehicle, and projection of the mobile phone is implemented on the central control screen. The central control screen may be a touchscreen, and the user may perform an operation by touching the screen. In some cases, a voice signal of a user may be obtained by using the microphone, and some control performed by the user on the vehicle 100 is implemented based on analysis of the voice signal of the user, for example, adjusting a temperature inside the vehicle. In some other cases, music may be played to the user by using the sound.

The navigation system 113 may include a map service provided by a map supplier, to provide navigation of a driving route for the vehicle 100. The navigation system 113 may be used together with a global positioning system 121 and an inertial measurement unit 122 of the vehicle. The map service provided by the map provider may be a two-dimensional map or a high-precision map. The sensing system 120 may include several sensors configured to sense and detect the surrounding environment information of the vehicle 100. For example, the sensing system 120 may include the global positioning system 121 (where the global positioning system may be a GPS system, a BeiDou system, or another positioning system), the inertial measurement unit (inertial measurement unit, IMU) 122, lidar 123, a millimeter-wave radar 124, an ultrasonic radar 125, and a camera apparatus 126. The sensing system 120 may further include sensors (for example, an in-vehicle air quality monitor, a fuel gauge, and an oil temperature gauge) of an internal system of the monitored vehicle 100. Sensor data from one or more of these sensors may be used to detect an object and corresponding features (a position, a shape, a direction, a speed, and the like) of the object. Such detection and recognition are key functions of safe operation of the vehicle 100.

The global positioning system 121 may be used to estimate a geographical location of the vehicle 100.

The inertial measurement unit 122 is configured to sense a location and an orientation changes of the vehicle 100 based on an inertial acceleration. In some embodiments, the inertial measurement unit 122 may be a combination of an accelerometer and a gyroscope.

The lidar 123 may use a laser to sense an object in an environment in which the vehicle 100 is located. In some embodiments, the lidar 123 may include one or more laser sources, laser scanners, one or more detectors, and another system component.

The millimeter-wave radar 124 may sense an object in the surrounding environment of the vehicle 100 by using a radio signal. In some embodiments, in addition to sensing an object, the radar 126 may further be configured to sense a speed and/or a moving direction of the object.

The ultrasonic radar 125 may sense an object around the vehicle 100 by using an ultrasonic signal. The camera apparatus 126 may be configured to capture image information of the surrounding environment of the vehicle 100. The camera apparatus 126 may include a monocular camera, a binocular camera, a structured light camera, a panoramic camera, or the like. The image information obtained by the camera apparatus 126 may include a static image, or may include video stream information.

The decision control system 130 includes a computing system 131 that performs analysis and decision-making based on information obtained by the sensing system 120. The decision control system 130 further includes a vehicle controller 132 that controls a power system of the vehicle 100, and a steering system 133, a throttle 134, and a braking system 135 that are configured to control the vehicle 100.

The computing system 131 may operate to process and analyze various information obtained by the sensing system 120 to identify a target, an object, and/or a feature in the environment around the vehicle 100. The target may include a pedestrian or an animal, and the object and/or the feature may include a traffic signal, a road boundary, or an obstacle. The computing system 131 may use technologies such as an object recognition algorithm, a structure from motion (structure from motion, SFM) algorithm, and video tracking. In some embodiments, the computing system 131 may be configured to: map an environment, track an object, estimate a speed of an object, or the like. The computing system 131 may analyze the obtained information and obtain a control policy for the vehicle.

The vehicle controller 132 may be configured to coordinate and control a power battery and an engine 141 of the vehicle, to improve power performance of the vehicle 100.

The steering system 133 may be operated to adjust a heading direction of the vehicle 100. For example, in an embodiment, the steering system may be a steering wheel system.

The throttle 134 is configured to control an operating speed of the engine 141 and further control a speed of the vehicle 100.

The braking system 135 is configured to control the vehicle 100 to decelerate. The braking system 135 may slow down wheels 144 by using a friction force. In some embodiments, the braking system 135 may convert kinetic energy of the wheels 144 into a current. The braking system 135 may alternatively use another form to reduce rotation speeds of the wheels 144, to control the speed of the vehicle 100.

The drive system 140 may include a component that provides power for the vehicle 100 to move. In an embodiment, the drive system 140 may include the engine 141, an energy source 142, a transmission system 143, and the wheels 144. The engine 141 may be an internal combustion engine, a motor, an air compression engine, or another type of engine combination, for example, a hybrid engine including a gasoline engine and a motor, or a hybrid engine including an internal combustion engine and an air compression engine. The engine 141 converts the energy source 142 into mechanical energy.

Examples of the energy source 142 include gasoline, diesel, other oil-based fuels, propane, other compressed gas-based fuels, anhydrous alcohol, solar panel, battery, and another power source. The energy source 142 may also provide energy to another system of the vehicle 100.

The transmission apparatus 143 may transmit mechanical power from the engine 141 to the wheels 144. The transmission apparatus 143 may include a gearbox, a differential, and a drive shaft. In an embodiment, the transmission apparatus 143 may further include another component, for example, a clutch. The drive shaft may include one or more shafts that may be coupled to one or more wheels 121.

Some or all functions of the vehicle 100 are controlled by the computing platform 150. The computing platform 150 may include at least one processor 151. The processor 151 may execute an instruction 153 stored in a non-transitory computer readable medium such as a memory 152. In some embodiments, the computing platform 150 may alternatively be a plurality of computing devices that control individual components or subsystems of the vehicle 100 in a distributed manner.

The processor 151 may be any conventional processor, for example, a commercially available CPU. Alternatively, the processor 151 may further include a graphic processing unit (graphic processing unit, GPU), a field programmable gate array (field programmable gate array, FPGA), a system on chip (system on chip, SOC), an application specific integrated chip (application specific integrated circuit, ASIC), or a combination thereof. Although FIG. 1 functionally illustrates the processor, the memory, and another component of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Therefore, it is understood that a reference to the processor or the computer includes a reference to a set of processors or computers or memories that may or may not operate in parallel. Different from using a single processor to perform steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the memory 152 may include the instruction 153 (for example, program logic), and the instruction 153 may be executed by the processor 151 to perform various functions of the vehicle 100. The memory 152 may also include additional instructions, including instructions used to send data to, receive data from, interact with, and/or control one or more of the infotainment system 110, the sensing system 120, the decision control system 130, and the drive system 140.

In addition to the instruction 153, the memory 152 may further store data, such as a road map, route information, and a location, a direction, a speed, and other such vehicle data of the vehicle, and other information. Such information may be used by the vehicle 100 and the computer system 150 during operation of the vehicle 100 in autonomous, semi-autonomous, and/or manual modes. The computing platform 150 may control functions of the vehicle 100 based on input received from various subsystems (for example, the drive system 140, the sensing system 120, and the decision control system 130). For example, the computing platform 150 may utilize input from the decision control system 130 to control the steering system 133 to avoid an obstacle detected by the sensing system 120. In some embodiments, the computing platform 150 may be operated to provide control over many aspects of the vehicle 100 and the subsystems of the vehicle 100.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of this application.

An autonomous vehicle driving on a road, such as the vehicle 100, may identify an object in a surrounding environment of the vehicle to determine to adjust a current speed. The object may be another vehicle, a traffic control device, or another type of object. In some examples, the autonomous vehicle may independently consider each identified object, and may determine a to-be-adjusted speed of the autonomous vehicle based on a feature of each identified object, such as a current speed of the object, acceleration of the object, or a distance between the object and the autonomous vehicle.

Optionally, the vehicle 100 or a sensing and computing device (for example, the computing system 131 or the computing platform 150) associated with the vehicle 100 may predict a behavior of the identified object based on the feature of the recognized object and a state of the surrounding environment (for example, traffic, rain, ice on the road, or the like). Optionally, all identified objects depend on behaviors of each other, and consequently, all the identified objects may be considered together to predict a behavior of a single identified object. The vehicle 100 may adjust the speed of the vehicle 100 based on the predicted behavior of the identified object. In other words, the autonomous vehicle may determine, based on the predicted behavior of the object, a specific stable state (for example, acceleration, deceleration, or stop) to which the vehicle needs to be adjusted. In this process, another factor may also be considered to determine the speed of the vehicle 100, for example, a horizontal location of the vehicle 100 on a road on which the vehicle travels, curvature of the road, or proximity between a static object and a dynamic object.

In addition to providing an instruction for adjusting the speed of the autonomous vehicle, the computing device may provide an instruction for modifying a steering angle of the vehicle 100, so that the autonomous vehicle follows a given track and/or maintains safe transverse and longitudinal distances from an object (for example, a car in an adjacent lane on the road) next to the autonomous vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in this embodiment of this application.

For ease of understanding embodiments of this application, the following describes terms used in embodiments of this application.
(1) CAN bus: A CAN bus is a type of field bus. Different from a common point-to-point bus structure, the controller area network, (controller area network, CAN) allows electronic controllers (electronic control units, ECUs) to be mounted to a same main line through branch lines. The time division and arbitration modes ensure that each node may be directly controlled by a CPU as a main node, implementing a structure with a plurality of main nodes, that is, a structure without distinction between a main node and a secondary node.
(2) CAN: Controller area network (controller area network, CAN) is a vehicle bus standard with rich functions. It is designed to allow communication between a micro-controller and an instrument without a need of a host (Host).
(3) Lidar: Lidar (LiDar) is also referred to as light detection and ranging (light detection and ranging, LDR). It is a sensing technology that a light source and a receiver are used to detect and range objects remotely. In a vehicle field, a function of the lidar is to detect and model an obstacle around the vehicle.
(4) MCU: A micro-control unit (micro-control unit, MCU) is also referred to as a processing unit, control unit, or single-chip microcomputer (single chip microcomputer, SCM). With emergence and development of large-scale integrated circuits, the MCU integrates a CPU, a RAM, a ROM, a timer, and a plurality of I/O interfaces of a computer into a chip to form a chip-level computer for different application scenarios.

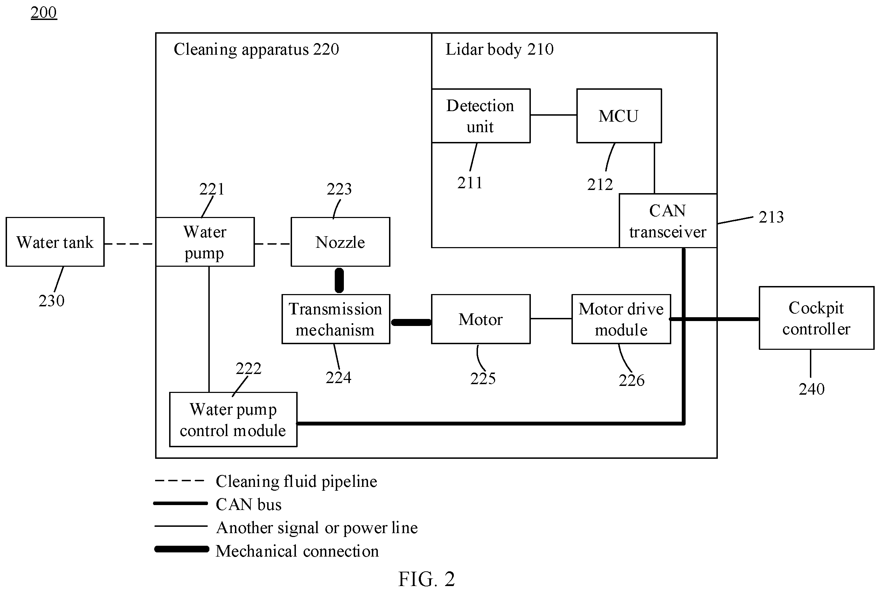

FIG. 2 is a schematic diagram 200 of an architecture of lidar and a cleaning apparatus of the lidar according to an embodiment of this application.

As shown in FIG. 2, the schematic diagram of the architecture of the lidar and the cleaning apparatus of the lidar may include a lidar body apparatus 210 and a cleaning apparatus 220. The lidar body apparatus 210 may be connected to the cleaning apparatus 220 through a CAN bus. The lidar body apparatus 210 may include a detection unit 211, an MCU 212, and a CAN transceiver 213. The cleaning apparatus 220 may include a water pump 221, a water pump control module 222, a nozzle 223, a transmission mechanism 224, a motor 225, and a motor drive module 226. The detection unit 211 may be located in the lidar body apparatus 210 inside the lidar device, and is connected to the MCU 212 and the CAN transceiver 213 through a signal cable. Alternatively, the detection unit 211 may be located outside the lidar body apparatus 210, and is connected to the MCU 212 through a signal cable.

In the cleaning apparatus 220, the water pump 221 and the nozzle 223 may be connected through a cleaning pipe line, the water pump 221 and the water pump control module 222 may be connected through a signal cable, the nozzle 223, the transmission mechanism 224, and the motor 225 may be connected by using a mechanical connection, and the motor 225 and the motor drive module 226 may be connected through a signal cable.

**In** addition, the diagram of the architecture of the lidar and the cleaning apparatus of the lidar may be externally connected to a water tank 230 and a cockpit controller 240. The water tank 230 may be connected to the water pump 221 in the cleaning apparatus 220 through a cleaning fluid pipeline. The cockpit controller 240 may be connected to the CAN transceiver 213 of the lidar body 210 through a CAN bus.

The lidar body apparatus 210 may communicate with the motor drive module 226, the water pump controller 222, and the body cockpit controller 240 through an interface of the CAN transceiver 213. As a computing center of the entire apparatus, the MCU 212 in the lidar body is responsible for processing sensing data, sending execution instructions to the motor drive module 226 and the water pump 221, and sending an alarm signal to the cockpit controller 240.

It should be understood that the CAN bus in FIG. 2 may be a special signal line used to transmit a CAN signal. The signal line may be a signal line used to transmit another signal other than the CAN signal, and the mechanical connection may be a connection performed in a mechanical manner, for example, by using a gear or a bearing.

It should be further understood that in embodiments of this application, unless otherwise specified and limited, terms such as "connection" and "connection" should be understood in a broad sense. For example, the terms may be a fixed connection, a detachable connection, or an integrated connection; the terms may be a mechanical connection, an electrical connection, or mutual communication; or the terms may be a direct connection, an indirect connection through an intermediate medium, or a connection inside two elements or an interaction relationship between two elements. For a person of ordinary skill in the art, specific meanings of the foregoing terms in the present invention may be understood based on a specific situation.

In an actual application process of the lidar apparatus, the detection unit 211 may obtain a location of a shielding object on a lidar window, and the MCU 212 determines a to-be-cleaned area based on the location of the shielding object, and controls the motor drive module 226 and the water pump control module 222 by using the CAN transceiver 213. The motor drive module 226 controls the motor 225 to work, and the motor 225 drives, by using the transmission mechanism 224, the nozzle 223 to move to the location of the shielding object. The water pump control module 222 controls the water pump 221 to work, the water pump 221 drives water or detergent from the water tank 230 to the nozzle 223, and the nozzle 223 starts to spray water or detergent to clean the shielding object.

In this embodiment of this application, a cleaning device is directly controlled by lidar, and the cleaning device and the lidar are electrically connected. There is no need to build a hardware cable for the cleaning apparatus and a third-party controller when working, and there is no need for software adaptation, which can shorten software tuning duration and improve efficiency of a cleaning system.

In this embodiment of this application, various appropriate solutions may be used for the detection unit 221 to obtain location information of the shielding object and the MCU 212 to determine the to-be-cleaned area.

In a possible implementation, the location information of the shielding object on the lidar window may be obtained in a manner in which the detection unit 211 obtains shielding information of the shielding object on the lidar window.

The lidar may quickly and accurately obtain three-dimensional images of different scenarios in a three-dimensional imaging manner. In addition, the detection unit 211 of the lidar may identify the location of the shielding object on the lidar window on the obtained three-dimensional image, to determine whether the lidar window needs to be cleaned. Consequently, this embodiment of this application is mainly for specific area cleaning of the lidar window. Another type of lidar may not be applicable to this embodiment of this application because the location of the shielding object on the lidar window may not be identified.

Optionally, the location information of the shielding object on the lidar window may include a shielded area of the shielding object on the lidar window.

It should be understood that the determined to-be-cleaned area is not limited in this embodiment of this application, and the to-be-cleaned area may alternatively be in any shape, for example, a sector, a rectangle, or a circle. A range of the to-be-cleaned area may be greater than, equal to, or less than the range of the shielded area.

For example, when a horizontal coordinate range of the shielding area on the lidar window is [x1, x2], the range of the determined to-be-cleaned area may be [x1, x2]. In this case, the determined to-be-cleaned area is equal to the shielded area of the shielding object, and the shielding object may be exactly cleaned in a targeted manner. Alternatively, the determined to-be-cleaned range may be [x1-a1, x2+a2], where a1 and a2 may be preset parameters, and values of a1 and a2 are greater than 0. In this case, the determined to-be-cleaned area is larger than the shielded area of the shielding object.

For another example, when the shielded area on the lidar window is a sector with a radius of R, the range of the determined to-be-cleaned area may be the sector with a radius of R. In this case, the determined to-be-cleaned area is equal to the shielded area of the shielding object, and the shielding object may be exactly cleaned in a targeted manner. The range of the determined to-be-cleaned area may alternatively be a sector with a radius of R+r, where r may be a preset parameter, and a value of r is greater than 0. In this case, the determined to-be-cleaned area is larger than the shielded area of the shielding object.

It should be understood that, when the to-be-cleaned area is represented by a coordinate range, the nozzle of the corresponding cleaning apparatus may be a sliding cleaning nozzle; or when the to-be-cleaned area is represented by a sector, the nozzle of the corresponding cleaning apparatus may be a rotating cleaning nozzle.

Optionally, the location information of the shielding object on the lidar window may include a coordinate range of the shielding object on the lidar window. In this case, the MCU 212 may determine the coordinate range of the to-be-cleaned area based on the coordinate range of the shielding object on the lidar window.

Optionally, the coordinate range of the to-be-cleaned area is greater than or equal to the coordinate range of the shielding object on the lidar window.

It should be understood that, in this embodiment of this application, the coordinate range of the shielding object on the lidar window may include a horizontal coordinate range of the shielding object, or may include a vertical coordinate range of the shielding object, or may include horizontal and vertical coordinate ranges of the shielding object. The coordinate range of the determined to-be-cleaned area may include a horizontal coordinate range of the to-be-cleaned area, or may include a vertical coordinate range of the to-be-cleaned area, or may include horizontal and vertical coordinate ranges of the to-be-cleaned area.

In this embodiment of this application, the detection unit 211 of the lidar may detect the coordinate range of the shielding object on the lidar window, and then the MCU 212 of the lidar determines the coordinate range of the to-be-cleaned area based on the coordinate range of the shielding object on the lidar window, and controls the cleaning apparatus to clean the to-be-cleaned area within the coordinate range of the to-be-cleaned area. Thus, specific area cleaning may be performed on the lidar window in a more refined manner, and the cleaning efficiency of the lidar window may be improved.

In this embodiment of this application, that the MCU 212 controls, based on the to-be-cleaned area, the cleaning apparatus to clean the lidar window may use various appropriate cleaning solutions.

In a possible implementation, the MCU 212 may determine a motor parameter based on the coordinate range of the shielding object on the lidar window. The MCU 212 may further control, based on the motor parameter, the motor to rotate and drive the nozzle 223 to clean the to-be-cleaned area of the lidar window.

Specifically, the motor parameter may refer to a parameter that needs to be set for the motor of the nozzle when the cleaning apparatus performs cleaning. For example, the motor parameter may be a motor rotation angle, and the motor rotation angle may correspond to the horizontal coordinate range of the shielding object on the window in a specific range. In this way, the MCU 212 may control, based on the motor rotation angle, the nozzle 223 of the cleaning apparatus to perform cleaning on the lidar window in a targeted manner.

Table 1 is an example of a correspondence between the horizontal coordinate range of the shielding object on the window and the motor rotation angle.

**Table 1**

| Horizontal coordinate range of the shielding object on the window | Motor rotation angle of the nozzle |
|---|---|
| [X1, X2] | [θ1, θ2] |
| [X3, X4] | [θ3, θ4] |
| [X5, X6] | [θ5, θ6] |

According to the implementation of Table 1, when the horizontal coordinate range of the shielding object on the window is [X1, X2], a corresponding motor rotation angle range of the nozzle is [θ1, θ2]. After the motor rotation angle range of the nozzle is determined, the MCU 212 may control, based on motor rotation angle range, the motor 225 to rotate to a corresponding angle, and the motor 225 may control the nozzle 223 to perform specific area cleaning, to avoid resource waste caused by large-scale cleaning.

Specifically, in a process in which the motor 225 controls the nozzle 223 to perform cleaning, the motor 225 may control the nozzle 223 to perform scanning in different ranges. For example, when the horizontal coordinate range of the shielding object on the window is [X1, X2], the motor 225 may control the nozzle 223 to perform scanning in the range [X1, X2]. In this case, a scan range of the nozzle 223 is equal to the horizontal coordinate range of the shielding object on the lidar window, and the shielding object may be exactly cleaned.

In another case, when the horizontal coordinate range of the shielding object on the window is [X1, X2], the motor 225 may control the nozzle 223 to perform scanning in a range of [0, X2], or may control the nozzle 223 to scan in a range of [X1-b1, X2], where b1 is a positive number and may be preset. The motor 225 may further control the nozzle to perform scanning in a range of [X1, X2+b2], where b2 is a positive number and may be preset. In this case, a scan range of the nozzle 223 is greater than the horizontal coordinate range of the shielding object on the lidar window, and the shielding object may be cleaned more effectively.

In an example, when the horizontal coordinate ranges of the shielding object on the lidar window are [X1, X2] = [0, 20], [X3, X4] = [20, 40], and [X5, X6] = [40, 60], the corresponding motor rotation angles of the nozzle respectively are [θ1, θ2] = [2π, 6π], [θ3, θ4] = [6π, 10π], and [θ5, θ6] = [10π, 14π]. A unit of a horizontal coordinate of the shielding object on the lidar window is millimeter (mm), and a unit of the motor rotation angle of the nozzle is rad.

It should be understood that, in this embodiment of this application, the rotation angle of the motor may be determined by using the foregoing table lookup method or by using a formula calculation method.

According to the invention, the motor parameter is a motor rotation speed, and the motor rotation speed corresponds to the horizontal coordinate range of the shielding object on the window in a specific range. In this way, the MCU 212 may control, based on the motor rotation speed, the nozzle 223 of the cleaning apparatus to clean the lidar window.

Table 2 is an example of a correspondence between the horizontal coordinate range of the shielding object on the window and the motor rotation speed.

**Table 2**

| Horizontal coordinate range of the shielding object on the window | Motor rotation speed of the nozzle |
|---|---|
| [X1, X2] | ε1 |
| [X3, X4] | ε2 |
| [X5, X6] | ε3 |

According to the implementation in Table 2, when the horizontal coordinate range of the shielding object on the window is [X1, X2], a corresponding rotation speed range of the nozzle motor is ε1. Consequently, the MCU 212 may control the rotation speed of the motor 225 based on the location of the shielding object on the lidar window, to control a scan speed of the nozzle 223, so as to improve the cleaning efficiency of the lidar window.

In an example, when the horizontal coordinate ranges of the shielding object on the lidar window are [X1, X2] = [0, 20], [X3, X4] = [20, 40], and [X5, X6] = [40, 60], corresponding motor rotation angles of the nozzle respectively are ε1 = 15, ε2 = 11, and ε1 = 8. The unit of a horizontal coordinate of the shielding object on the lidar window is millimeter (mm), and a unit of the motor rotation speed of the nozzle is r/s.

According to the invention, if the horizontal coordinate range of the shielding object is located in a center of the lidar window, the motor rotation speed is set to a small value. Therefore, the nozzle 223 better cleans the center of the lidar window, to ensure cleaning efficiency of a core area. In this embodiment of this application, the MCU 212 may determine the motor parameter based on the coordinate range of the shielding object on the lidar window, and control the motor 225 based on the motor parameter and drive the nozzle 223 to clean the lidar window. Cleaning may be performed in a targeted manner, to improve the cleaning efficiency of the lidar window.

In a possible implementation, when a quantity of times that the cleaning apparatus has continuously performed cleaning is less than a first threshold, the MCU 212 controls the cleaning apparatus to perform cleaning. When the quantity of times that the cleaning apparatus has continuously performed cleaning is greater than the first threshold, the MCU 212 sends the alarm signal to the cockpit controller 240, to request manual intervention.

It should be understood that, in this embodiment of this application, the first threshold may be a preset quantity of lidar cleaning times before cleaning starts, or may be a quantity of times that the shielding object needs to be cleaned in an actual cleaning process. The quantity of times of continuous cleaning may refer to a quantity of times that the cleaning apparatus has continuously performed cleaning under the control of the MCU 212, or may refer to a quantity of times that the execution has been continuously performed in an entire process from obtaining the location information of the shielding object to controlling the cleaning apparatus to perform cleaning.

In this embodiment of this application, different specific area cleaning policies may be used by comparing the quantity of times that the cleaning has been continuously performed with the first threshold. When the quantity of times that the cleaning has been continuously performed is large, it indicates that a common cleaning method of the cleaning apparatus may not effectively clean the shielding object. In this case, manual intervention is required. In this way, running stability of the cleaning system can be improved, and the cleaning efficiency of the lidar is improved.

In a possible implementation, when duration for which the cleaning apparatus continuously performs cleaning is shorter than a second threshold, the MCU 212 may control the cleaning apparatus to clean the to-be-cleaned area of the lidar window. When the duration for which the cleaning apparatus continuously performs cleaning is longer than the second threshold, the MCU 212 may control the nozzle 223 to move to an end of a guide rail, where the end of the guide rail is located outside a visible range of the lidar window.

In this embodiment of this application, a working status of the cleaning apparatus may be determined by comparing the duration for which the cleaning is performed with the second threshold. When the duration for which the cleaning apparatus continuously performs cleaning is short, the cleaning apparatus is controlled to perform specific area cleaning. When the duration of cleaning of the cleaning apparatus reaches duration required for cleaning the shielding object, the nozzle is controlled to move to the end of the guide rail, so that the nozzle is located outside the visible range of the lidar window. In this manner, in one aspect, the duration of cleaning performed by the cleaning apparatus can be controlled, thereby saving cleaning resources. In another aspect, the nozzle can be prevented from being directly exposed to the environment after performing cleaning, which improves performance of the nozzle.

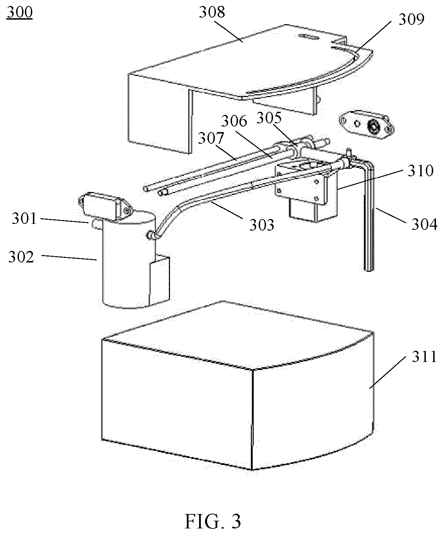

FIG. 3 is a schematic diagram of a cleaning apparatus 300 according to an embodiment of this application. The apparatus may be applied to the vehicle 100 in FIG. 1, or may be applied to the lidar and the cleaning system 200 of the lidar in FIG. 2.

As shown in FIG. 3, the cleaning apparatus 300 may include a water inlet pipe 301, a water pump 302, a water outlet pipe 303, a customized nozzle 304, a customized screw rod nut 305, a screw rod 306, a guide rod 307, a cover 308, a guide rail 309, a motor 310, and lidar 311. The cleaning apparatus 300 may be integrated with a lidar body, that is, control modules of the water pump 302 and the motor 310 may be connected to the lidar body through a CAN bus. In this manner, the cleaning device 300 may be directly controlled by the lidar. There is no need to build a hardware cable for the cleaning apparatus and a third-party controller when working, and there is no need for software adaptation, which can shorten software tuning duration and improve efficiency of a cleaning system.

In the cleaning apparatus 300, the water inlet pipe 301 is connected to the water pump 302, one end of the water outlet pipe 303 is connected to the water pump 302, and the other end is connected to the customized nozzle 304. The customized nozzle 304 is located on the customized screw rod nut 305, and is configured to clean the lidar 311. The customized nozzle 304 may use different types of cleaning solutions. For example, the customized nozzle 304 may repeatedly perform scanning within a range of a shielding object, and perform cleaning by spraying water or detergent. A cleaning manner of the customized nozzle 304 is not limited in this application.

The customized screw rod nut 305 is located on the screw rod 306 and the guide rod 307, and may move on the screw rod 306 and the guide rod 307. The guide rail 309 is located on the cover 308. The customized nozzle 304 may move along the guide rail 309, and the motor 310 is configured to drive the customized nozzle 304 and the customized screw rod nut 305 to clean a lidar window. When the cleaning apparatus 300 performs cleaning, the motor 310 controls the customized screw rod nut 305 to perform linear movement, and the customized screw rod nut 305 drives the customized nozzle 304 to move along the guide rail to a location of the shielding object and clean the shielding object.

It should be understood that an orientation or a location relationship indicated by "up", "down", or the like in embodiments of this application is based on an orientation or a location relationship shown in the accompanying drawings, and is merely intended to facilitate description of the present invention and simplify description, but does not indicate or imply that a specified apparatus or element must have a specific orientation, and must have a specific structure and operation. Therefore, this cannot be construed as a limitation on the present invention.

In this embodiment of this application, by using a structure with the motor, the screw rod, and the guide rail, the customized nozzle can perform scanning motion along the lidar window, so that a structure of the cleaning system is more compact, and space utilization is high.

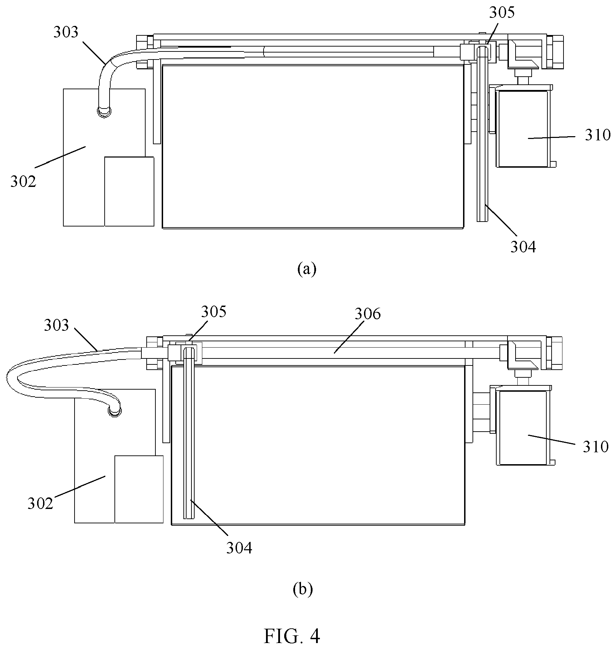

FIG. 4 is another schematic diagram of the cleaning apparatus 300 according to this embodiment of this application. The schematic diagram is a front view of the cleaning apparatus in FIG. 3. (a) in FIG. 4 is a schematic diagram of the apparatus in a static state, and (b) in FIG. 4 is a schematic diagram of the apparatus in a state of performing cleaning.

As shown in (a) in FIG. 4, when the cleaning apparatus is in the static state, the customized nozzle 304 is located at an end of the guide rail. Because the end of the guide rail is located outside a visible range of the lidar window, the customized nozzle 304 may be in a hidden state relative to the lidar window.

As shown in (b) in FIG. 4, when the cleaning apparatus is in the state of performing cleaning, the motor 310 controls the customized screw rod nut 305 to perform linear movement, and the customized screw rod nut 305 drives the customized nozzle 304 to move along the screw rod 306 to the location of the shielding object and clean the shielding object. After the cleaning is completed, the motor 310 controls the customized nozzle 304 to move again to the end of the guide rail. Because the end of the guide rail is located outside the visible range of the lidar window, the customized nozzle 304 may be in a hidden state again relative to the lidar window.

It should be understood that the hidden state of the nozzle shown in FIG. 4 is merely an example for description, and this is not limited in this application. A hiding manner may be controlling the customized nozzle to move back to an initial position for hiding, or may be controlling the customized nozzle to move to a new position for hiding, or the like.

In this embodiment of this application, when the lidar window does not need to be cleaned, the nozzle can be completely hidden. After the lidar window is cleaned, the nozzle may be controlled to be in a hidden state again. In this way, in this embodiment of this application, the nozzle can be effectively protected, and overall space utilization of the cleaning system is improved.

In practice, a conventional lidar cleaning apparatus may only be used to clean the lidar window in a wide range through a fixed program. In such a cleaning manner, in one aspect, the shielding object is not easily cleaned in a targeted manner. In another aspect, once a fixed program cleaning mode is started, fixed duration and a fixed quantity of cleaning agent are consumed, which is inefficient and causes a waste of resources. Embodiments of this application provide a specific area cleaning method, so that a shielding object on a lidar window can be cleaned in a targeted manner, which improves cleaning efficiency.

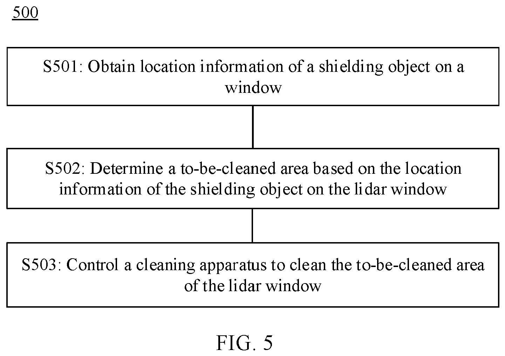

FIG. 5 is a schematic diagram of a method 500 for cleaning a specific area of lidar according to an embodiment of this application. The method for cleaning a specific area of lidar may be applied to the lidar and the cleaning system 200 of the lidar in FIG. 2, and may also be applied to the cleaning apparatus in FIG. 3 or FIG. 4. The method 500 may include the following steps.

S501: Obtain location information of a shielding object on a lidar window.

Optionally, the location information of the shielding object on the lidar window may include a shielded area of the shielding object on the lidar window.

Optionally, the location information of the shielding object on the lidar window may include a coordinate range of the shielding object on the lidar window.

It should be understood that, in this embodiment of this application, the location information of the shielding object on the lidar window may include the shielded area of the shielding object, the coordinate range of the shielding object on the lidar window, a size of the shielded area of the shielding object, or the like.

S502: Determine a to-be-cleaned area of the lidar window based on the location information of the shielding object on the lidar window.

Optionally, this step may include: determining the to-be-cleaned area based on the shielded area of the shielding object on the lidar window.

Optionally, this step may include: determining a coordinate range of the to-be-cleaned area based on the coordinate range of the shielding object on the lidar window.

It should be understood that the determined to-be-cleaned area is not limited in this embodiment of this application, and the to-be-cleaned area may alternatively be in any shape, for example, a sector, a rectangle, or a circle. A size of the to-be-cleaned area may be greater than, equal to, or less than the size of the shielded area.

S503: Control a cleaning apparatus to clean the to-be-cleaned area of the lidar window.

Based on the foregoing technical solution, the embodiment of this application provides an efficient lidar cleaning method. In the method, the cleaning apparatus can be controlled, based on a location of the shielding object on the lidar window, to perform specific area cleaning on lidar in a targeted manner, which improves lidar cleaning efficiency.

In this embodiment of this application, that the cleaning apparatus is controlled, based on the to-be-cleaned area, to clean the lidar window may use various appropriate cleaning solutions.

In a possible implementation, step S503 further includes: determining a motor parameter based on the coordinate range of the shielding object on the lidar window; and controlling, based on the motor parameter, the motor to rotate and driving the cleaning apparatus to clean the to-be-cleaned area of the lidar window.

In this embodiment of this application, the motor parameter may be determined based on a horizontal coordinate range of the shielding object on the lidar window, and the cleaning apparatus is controlled, based on the motor parameter, to perform cleaning in a targeted manner, so as to improve cleaning efficiency of the cleaning apparatus.

In a possible implementation, in step S503, when the quantity of times that the cleaning apparatus has continuously performed cleaning is less than a first threshold, the cleaning apparatus is controlled to perform cleaning; or when the quantity of times that the cleaning apparatus has continuously performed cleaning is greater than the first threshold, an alarm signal is sent, where the alarm signal is used to request manual intervention.

In this embodiment of this application, different specific area cleaning policies may be used by comparing the quantity of times that the cleaning has been continuously performed with the first threshold. When the quantity of times that the cleaning has been continuously performed is large, it indicates that a common cleaning method of the cleaning apparatus may not effectively clean the shielding object. In this case, manual intervention is required. In this way, the running stability of the cleaning system can be improved, and the cleaning efficiency of the lidar is improved.

In a possible implementation, in step S503, when duration for which the cleaning apparatus continuously performs cleaning is shorter than a second threshold, the cleaning apparatus is controlled to clean the to-be-cleaned area of the lidar window; or when the duration for which the cleaning apparatus continuously performs cleaning is longer than the second threshold, the cleaning apparatus is controlled to be located outside a visible range of the lidar.

It should be understood that in this embodiment of this application, a manner of controlling the cleaning apparatus to be hidden outside the visible range of the lidar window is not limited. The method may be controlling the cleaning apparatus to move back to an initial position for hiding, or may be controlling the cleaning apparatus to move to a new location for hiding, or the like.

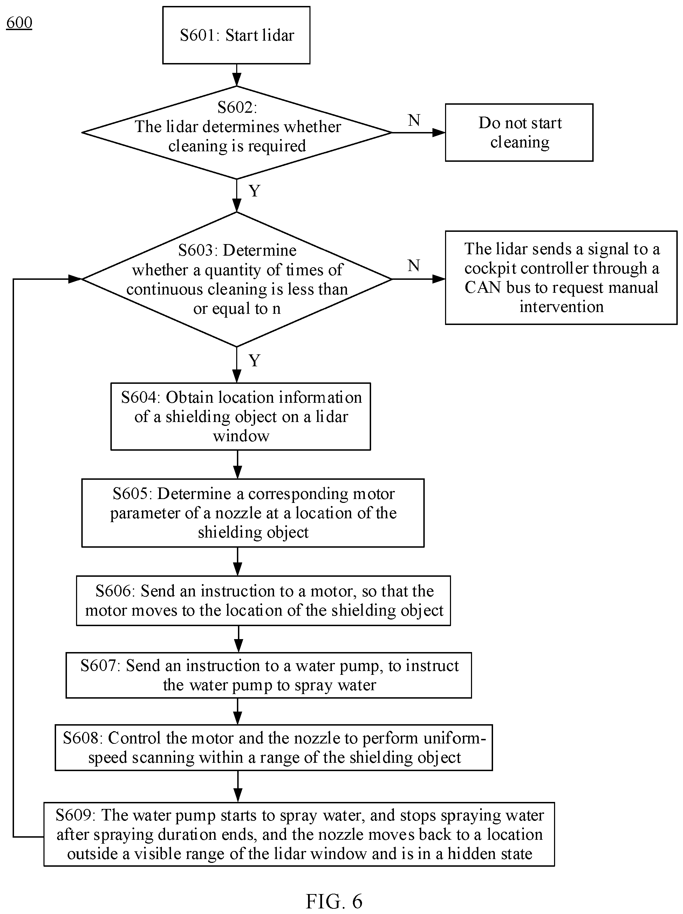

In this embodiment of this application, a working status of the cleaning apparatus may be determined by comparing the duration for which the cleaning apparatus continuously performs cleaning with the second threshold. When the duration for which the cleaning apparatus continuously performs cleaning is short, the cleaning apparatus is controlled to perform specific area cleaning. When the duration for which the cleaning apparatus continuously performs cleaning reaches duration required for cleaning the shielding object, the nozzle is controlled to be in a hidden state relative to the lidar window. In this manner, in one aspect, the duration of cleaning performed by the cleaning apparatus can be controlled, thereby saving cleaning resources. In another aspect, the cleaning apparatus can be prevented from being directly exposed to the environment after performing cleaning, which improves performance of the cleaning apparatus. The following describes this embodiment of this application in detail with reference to a process shown in FIG. 6.

FIG. 6 is a schematic diagram of a method 600 for cleaning a specific area of lidar according to an embodiment of this application. The method may be applied to the lidar and the cleaning system 200 of the lidar in FIG. 2, and may also be applied to the cleaning apparatus in FIG. 3 or FIG. 4. The method 600 may include the following steps.

S601: Start lidar.

S602: Determine whether lidar cleaning is required. If lidar cleaning is required, perform step S603; or if lidar cleaning is not required, the cleaning apparatus is not started for cleaning.

Optionally, the determining whether lidar cleaning is required includes: determining, based on returned point cloud, whether the lidar cleaning is required. Specifically, in this manner, whether there is a shielding object may be identified on a three-dimensional image returned from the point cloud.

It should be understood that, in this application, the manner of determining, by using the returned point cloud, whether the lidar cleaning is required is merely an example for description, and a determining method is not limited in this application.

S603: Determine whether a quantity of times that cleaning has been continuously performed is less than or equal to n. If the quantity of times that cleaning has been continuously performed is less than or equal to n, perform step S604; or if the quantity of times that cleaning has been continuously performed is not less than or equal to n, send an alarm signal to a cockpit controller to request manual intervention.

It should be understood that n may be an integer greater than or equal to 0, and a specific value of n may be preset based on an actual cleaning requirement.

In this way, in this embodiment of this application, the quantity of times that cleaning is performed by the cleaning apparatus can be controlled, and different cleaning policies may be used based on an actual situation, thereby improving stability of a cleaning system.

S604: Determine a location of the shielding object on a window.

Optionally, the determining a location of the shielding object on a window includes determining a horizontal coordinate range [X1, X2] of the shielding object on the window.

Optionally, this step further includes determining a ratio ε of the shielding object to the window and a size of a shielded area.

It should be understood that, in this embodiment of this application, the location of the shielding object on the window may be a horizontal coordinate range of the shielding object on the lidar window, or may be a vertical coordinate range of the shielding object on the lidar window, or the like.

S605: Determine a corresponding motor parameter of a nozzle at the location of the shielding object.

Optionally, the motor parameter includes a motor rotation angle range [θ1, θ2] of the nozzle in the range of [X1, X2].

It should be understood that the motor parameter may be a motor rotation angle, a motor rotation speed, or the like.

S606: Send an instruction to the motor, so that the motor moves to the location of the shielding object.

Optionally, the instruction includes a command for the motor to rotate by an angle θ1.

It should be understood that, the instruction sent to the motor is not limited in this embodiment of this application, and the instruction is applicable to this embodiment of this application provided that the motor may move, according to the instruction, to the location of the shielding object.

S607: Send an instruction to a water pump, where the instruction instructs the water pump to start to spray water.

S608: Control the motor and the nozzle to perform uniform-speed scanning within a range of the shielding object.

Optionally, this step includes: The motor performs uniform-speed scanning in the rotation angle range [θ1, θ2], and correspondingly, the nozzle performs uniform-speed scanning in the range [X1, X2].

It should be understood that, that the motor performs uniform-speed scanning in the rotation angle range [θ1, θ2] may mean that the motor moves back and forth in the rotation angle range [θ1, θ2], and that the nozzle performs uniform-speed scanning in the range [X1, X2] may mean that the nozzle moves back and forth in the range [X1, X2].

S609: The water pump starts to spray water, and stops spraying water after preset spraying duration ends, and the nozzle moves back to a location outside a visible range of the lidar window and is in a hidden state.

Optionally, it is assumed that the spraying duration is preset to T, and the water pump stops spraying water after εT.

It should be understood that a set parameter ε herein may refer to the ratio of the shielding object to the window, and a value of the parameter ε may be determined based on a ratio of the size of the shielded area of the shielding object to a size of the lidar window.

It should be further understood that a reason for multiplying the preset spraying duration T by a proportional coefficient is to cooperate with the nozzle to perform specific area cleaning on the shielding object of the lidar window.

Optionally, after the nozzle moves back to the location outside the visible range of the lidar window and is in a hidden state, step S602 continues to be performed.

Based on the foregoing technical solution, in this embodiment of this application, a to-be-cleaned area may be determined based on the location of the shielding object on the lidar window, and the cleaning apparatus is controlled to perform specific area cleaning in a targeted manner, which improves cleaning efficiency of the lidar window and saves cleaning resources. In addition, when the cleaning apparatus is not used, the nozzle is controlled to be located outside the visible range of the lidar window, which avoids direct exposure of the nozzle to an environment when the nozzle is not used, and prolongs a service life of the cleaning apparatus.

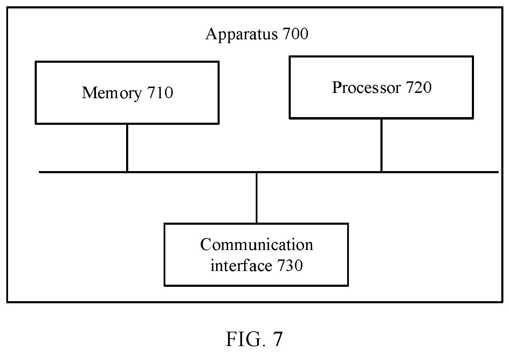

FIG. 7 is a schematic diagram of a lidar apparatus 700 according to an embodiment of this application. The apparatus may be applied to the vehicle 100 in FIG. 1, or may be applied to the diagram of the architecture of the lidar and the cleaning apparatus of the lidar in FIG. 2.

The lidar apparatus includes a memory 710, a processor 720, and a communication interface 730. The memory 710, the processor 720, and the communication interface 730 are connected through an internal connection path. The memory 710 is configured to store instructions. The processor 720 is configured to execute the instructions stored in the memory 720, to control the input/output interface 730 to receive/send at least some parameters of a second channel model. Optionally, the memory 710 may be coupled to the processor 720 through an interface, or may be integrated with the processor 720.

It should be noted that the communication interface 730 implements communication between a communication device 700 and another device or a communication network by using, for example but not limited to, a transceiver apparatus such as a transceiver. The communication interface 730 may further include an input/output interface (input/output interface).

In an implementation process, the steps in the foregoing methods may be implemented by using a hardware integrated logic circuit in the processor 720, or instructions in a form of software. The methods disclosed with reference to embodiments of this application may be directly implemented by a hardware processor, or may be implemented by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory 710, and the processor 720 reads information in the memory 710 and completes the steps in the foregoing methods in combination with hardware of the processor. To avoid repetition, details are not described herein again.

An embodiment of this application further provides a computer readable medium, where the computer readable medium stores program code. When the computer program code is run on a computer, the computer is enabled to perform any one of the foregoing methods in FIG. 5 or FIG. 6.

An embodiment of this application further provides a chip, including at least one processor and a memory. The at least one processor is coupled to the memory, and is configured to read and execute instructions in the memory, to perform any one of the foregoing methods in FIG. 5 or FIG. 6.

An embodiment of this application further provides an intelligent vehicle, including at least one processor and a memory. The at least one processor is coupled to the memory, and is configured to read and execute instructions in the memory, to perform any one of the foregoing methods in FIG. 5 or FIG. 6.

An embodiment of this application further provides an intelligent vehicle, including any one of the foregoing lidar device or apparatus in FIG. 2, FIG. 3, or FIG. 7.

It should be understood that, the processor in embodiments of this application may be a central control unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be further understood that in embodiments of this application, the memory may include the read-only memory and the random access memory, and provides instructions and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, or only B exists. In addition, the character "/" in this specification generally indicates an "or" relationship between associated objects.

It should be further understood that sequence numbers of the foregoing processes do not mean execution sequences in various embodiments of this application. The execution sequences of the processes should be determined based on functions and internal logic of the processes. The sequence numbers of the foregoing processes should not be construed as any limitation on the implementation processes of embodiments of this application.

Terms such as "component", "module", and "system" used in this specification indicate computer-related entities, hardware, firmware, a combination of hardware and software, software, or software being executed. For example, a component may be, but is not limited to, a process that runs on a processor, a processor, an object, an executable file, an execution thread, a program, and/or a computer. As illustrated by using figures, both an application that runs on a computing device and the computing device may be components. One or more components may reside within the process and/or the execution thread, and the component may be located on one computer and/or distributed between two or more computers. In addition, these components may be executed by various computer-readable media that store various data structures. For example, the component may communicate by using a local and/or remote process and based on a signal having one or more data packets (for example, data of two components interacting with another component in a local system, a distributed system, and/or across a network, for example, the internet interacting with another system by using a signal).

A person of ordinary skill in the art may be aware that, in combination with the examples described in embodiments disclosed in this specification, units and algorithm steps may be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may have another manner for division in actual implementation. For example, a plurality of units or components may be combined or integrated into another system, or some features may be ignored or not performed. In addition, displayed or discussed mutual couplings or direct couplings or communication connections may be implemented by using some interfaces. The indirect couplings or communication connections between apparatuses or units may be implemented in an electronic, a mechanical, or another form.

Units described as separate components may or may not be physically separate. Components displayed as units may or may not be physical units, may be located in one position, or may be distributed on a plurality of network units. Some or all units may be selected based on an actual requirement to achieve the objectives of the solutions of embodiments.

In addition, functional units in embodiments of this application may be integrated into one processing unit, or each of the units may physically and separately exist, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that may store program code, such as a USB flash drive, a removable hard disk drive, a read-only memory (Read-Only Memory, ROM), a random access memory (Random Access Memory, RAM), a magnetic disk, or an optical disc.

## Claims

1. A lidar device, comprising a cleaning apparatus (220, 300) and a control unit, wherein
the cleaning apparatus (220, 300) comprises a nozzle (223, 304), a screw rod (306), a motor (225, 310), and a guide rail (309);
the motor (225, 310) is rotatably disposed on the screw rod (306), to drive the nozzle (223, 304) to move along a defined track of the guide rail (309); and
the control unit determines a to-be-cleaned area of a lidar window based on location information of a shielding object on the lidar window, wherein the location information of the shielding object on the lidar window comprises a coordinate range of the shielding object on the lidar window, and controls the cleaning apparatus (220, 300) to clean the to-be-cleaned area of the lidar window;
the control unit determines a coordinate range of the to-be-cleaned area based on the coordinate range of the shielding object on the lidar window;
the control unit determines a motor parameter based on the coordinate range of the shielding object on the lidar window, wherein
the motor parameter is a motor rotation speed,
the motor rotation speed corresponds to a horizontal coordinate range of the shielding object on the lidar window in a specific range, and
if the horizontal coordinate range of the shielding object is located in a center of the lidar window, the motor rotation speed is set to a small value;
the control unit controls, based on the motor parameter, the motor (225, 310) to rotate and drives the nozzle (223, 304) to clean the to-be-cleaned area of the lidar window.

2. The lidar device according to claim 1, wherein the coordinate range of the to-be-cleaned area is greater than or equal to the coordinate range of the shielding object on the lidar window.

3. The lidar device according to claim 1 or 2, wherein the lidar device further comprises a detection unit (211), and the detection unit (211) obtains the location information of the shielding object on the lidar window.

4. The lidar device according to any one of claims 1 to 3, wherein when a quantity of times that the cleaning apparatus (220, 300) has continuously performed cleaning is less than a first threshold, the control unit controls the cleaning apparatus (220, 300) to perform cleaning.

5. The lidar device according to any one of claims 1 to 3, wherein the device further comprises a transceiver unit, and when a quantity of times that the cleaning apparatus (220, 300) has continuously performed cleaning is greater than a first threshold, the transceiver unit sends an alarm signal to a cockpit controller (240), wherein the alarm signal is used to request manual intervention.

6. The lidar device according to any one of claims 1 to 4, wherein when duration for which the cleaning apparatus (220, 300) continuously performs cleaning is shorter than a second threshold, the control unit controls the cleaning apparatus (220, 300) to clean the to-be-cleaned area of the lidar window.

7. The lidar device according to any one of claims 1 to 4, wherein when duration for which the cleaning apparatus (220, 300) continuously performs cleaning is longer than a second threshold, the control unit controls the nozzle (223, 304) to move to an end of the guide rail (309), wherein the end of the guide rail (309) is located outside a visible range of the lidar window.

8. The lidar device according to any one of claims 1 to 7, wherein the lidar device further comprises a lidar body (210), the lidar body (210) comprises a controller area network interface, and the cleaning apparatus (220, 300) further comprises a water pump control module (222) and a motor drive module (226); and
the controller area network interface is connected to the water pump control module (222) and/or the motor drive module (226) through a controller area network bus.

9. A lidar cleaning method, comprising:
obtaining location information of a shielding object on a lidar window, wherein the location information of the shielding object on the lidar window comprises a coordinate range of the shielding object on the lidar window;
determining a to-be-cleaned area of the lidar window based on the location information of the shielding object on the lidar window;
determining a coordinate range of the to-be-cleaned area based on the coordinate range of the shielding object on the lidar window;
determining a motor parameter based on the coordinate range of the shielding object on the lidar window; wherein
the motor parameter is a motor rotation speed,
the motor rotation speed corresponds to the horizontal coordinate range of the shielding object on the lidar window in a specific range, and
if the horizontal coordinate range of the shielding object is located in a center of the lidar window, the motor rotation speed is set to a small value; and
controlling, based on the motor parameter, a motor (225, 310) to rotate and driving the cleaning apparatus (220, 300) to clean the to-be-cleaned area of the lidar window; and
controlling a cleaning apparatus (220, 300) to clean the to-be-cleaned area of the lidar window.

10. An intelligent vehicle, comprising at least one processor (720) and a memory (152, 710), wherein the at least one processor (720) is coupled to the memory (152, 710), and is configured to read and execute instructions in the memory (152, 710), to cause the lidar device of any one of claims 1 to 8 to perform the method according to claim 9.

11. An intelligent vehicle, comprising the lidar device according to any one of claims 1 to 8.

## Patentansprüche

1. Lidar-Vorrichtung, umfassend eine Reinigungseinrichtung (220, 300) und eine Steuereinheit, wobei
die Reinigungseinrichtung (220, 300) eine Düse (223, 304), eine Gewindestange (306), einen Motor (225, 310) und eine Führungsschiene (309) umfasst;
der Motor (225, 310) drehbar auf der Gewindestange (306) angeordnet ist, um die Düse (223, 304) zum Bewegen entlang einer definierten Spur der Führungsschiene (309) anzutreiben; und
die Steuereinheit eine zu reinigende Fläche eines Lidar-Fensters basierend auf Standortinformationen eines abschirmenden Objekts auf dem Lidar-Fenster bestimmt, wobei die Standortinformationen des abschirmenden Objekts auf dem Lidar-Fenster einen Koordinatenbereich des abschirmenden Objekts auf dem Lidar-Fenster umfassen, und die Reinigungseinrichtung (220, 300) steuert, um die zu reinigende Fläche des Lidar-Fensters zu reinigen;
die Steuereinheit einen Koordinatenbereich der zu reinigenden Fläche basierend auf dem Koordinatenbereich des abschirmenden Objekts auf dem Lidar-Fenster bestimmt;
die Steuereinheit einen Motorparameter basierend auf dem Koordinatenbereich des abschirmenden Objekts auf dem Lidar-Fenster bestimmt, wobei
der Motorparameter eine Motordrehzahl ist,
die Motordrehzahl einem horizontalen Koordinatenbereich des abschirmenden Objekts auf dem Lidar-Fenster in einem spezifischen Bereich entspricht, und
sofern sich der horizontale Koordinatenbereich des abschirmenden Objekts in einer Mitte des Lidar-Fensters befindet, die Motordrehzahl auf einen kleinen Wert eingestellt wird;
die Steuereinheit den Motor (225, 310) basierend auf dem Motorparameter steuert, um sich zu drehen, und die Düse (223, 304) antreibt, um die zu reinigende Fläche des Lidar-Fensters zu reinigen.

2. Lidar-Vorrichtung nach Anspruch 1, wobei der Koordinatenbereich der zu reinigenden Fläche größer oder gleich dem Koordinatenbereich des abschirmenden Objekts auf dem Lidar-Fenster ist.

3. Lidar-Vorrichtung nach Anspruch 1 oder 2, wobei die Lidar-Vorrichtung ferner eine Detektionseinheit (211) umfasst, und die Detektionseinheit (211) die Standortinformation des abschirmenden Objekts auf dem Lidar-Fenster ermittelt.

4. Lidar-Vorrichtung nach einem der Ansprüche 1 bis 3, wobei, wenn eine Anzahl von Malen, welche die Reinigungseinrichtung (220, 300) kontinuierlich das Reinigen durchgeführt hat, geringer als ein erster Schwellenwert ist, die Steuereinheit die Reinigungseinrichtung (220, 300) steuert, um das Reinigen durchzuführen.

5. Lidar-Vorrichtung nach einem der Ansprüche 1 bis 3, wobei die Vorrichtung ferner eine Sende-Empfangseinheit umfasst und, wenn eine Anzahl von Malen, welche die Reinigungseinrichtung (220, 300) kontinuierlich das Reinigen durchgeführt hat, größer als ein erster Schwellenwert ist, die Sende-Empfangseinheit ein Alarmsignal an eine Cockpit-Steuerung (240) sendet, wobei das Alarmsignal verwendet wird, um einen manuellen Eingriff anzufordern.

6. Lidar-Vorrichtung nach einem der Ansprüche 1 bis 4, wobei, wenn die Dauer, über welche die Reinigungseinrichtung (220, 300) kontinuierlich das Reinigen durchführt, kürzer als ein zweiter Schwellenwert ist, die Steuereinheit die Reinigungseinrichtung (220, 300) steuert, um die zu reinigende Fläche des Lidar-Fensters zu reinigen.

7. Lidar-Vorrichtung nach einem der Ansprüche 1 bis 4, wobei, wenn die Dauer, über welche die Reinigungseinrichtung (220, 300) kontinuierlich das Reinigen durchführt, länger als ein zweiter Schwellenwert ist, die Steuereinheit die Düse (223, 304) steuert, um sich zu einem Ende der Führungsschiene (309) zu bewegen, wobei sich das Ende der Führungsschiene (309) außerhalb eines Sichtbereichs des Lidar-Fensters befindet.

8. Lidar-Vorrichtung nach einem der Ansprüche 1 bis 7, wobei die Lidar-Vorrichtung ferner einen Lidar-Körper (210) umfasst, der Lidar-Körper (210) eine Netzwerkschnittstelle für die Steuerungsfläche umfasst, und die Reinigungseinrichtung (220, 300) ferner ein Wasserpumpen-Steuermodul (222) und ein Motorantriebsmodul (226) umfasst; und
die Netzwerkschnittstelle für die Steuerungsfläche über einen Netzwerkbus für die Steuerungsfläche mit dem Wasserpumpen-Steuermodul (222) und/oder dem Motorantriebsmodul (226) verbunden ist.

9. Lidar-Reinigungsverfahren, umfassend:
Ermitteln von Standortinformationen eines abschirmenden Objekts auf einem Lidarfenster, wobei die Standortinformationen des abschirmenden Objekts auf dem Lidar-Fenster einen Koordinatenbereich des abschirmenden Objekts auf dem Lidar-Fenster umfassen;
Bestimmen der zu reinigenden Fläche des Lidar-Fensters basierend auf den Standortinformationen des abschirmenden Objekts auf dem Lidar-Fenster;
Bestimmen eines Koordinatenbereichs der zu reinigenden Fläche basierend auf dem Koordinatenbereich des abschirmenden Objekts auf dem Lidar-Fenster;
Bestimmen eines Motorparameters basierend auf dem Koordinatenbereich des abschirmenden Objekts auf dem Lidar-Fenster; wobei
der Motorparameter eine Motordrehzahl ist,
die Motordrehzahl dem horizontalen Koordinatenbereich des abschirmenden Objekts auf dem Lidar-Fenster in einem spezifischen Bereich entspricht, und
sofern sich der horizontale Koordinatenbereich des abschirmenden Objekts in einer Mitte des Lidar-Fensters befindet, die Motordrehzahl auf einen kleinen Wert eingestellt wird; und
Steuern eines Motors (225, 310) basierend auf dem Motorparameter, um sich zu drehen, und Antreiben der Reinigungseinrichtung (220, 300), um die zu reinigende Fläche des Lidar-Fensters zu reinigen; und
Steuern einer Reinigungseinrichtung (220, 300), um die zu reinigende Fläche des Lidar-Fensters zu reinigen.

10. Intelligentes Fahrzeug, umfassend mindestens einen Prozessor (720) und einen Speicher (152, 710), wobei der mindestens eine Prozessor (720) mit dem Speicher (152, 710) gekoppelt ist und dazu konfiguriert ist, Anweisungen in dem Speicher (152, 710) zu lesen und auszuführen, um zu bewirken, dass die Lidar-Vorrichtung nach einem der Ansprüche 1 bis 8 das Verfahren nach Anspruch 9 durchführt.

11. Intelligentes Fahrzeug, umfassend die Lidar-Vorrichtung nach einem der Ansprüche 1 bis 8.

## Revendications

1. Dispositif lidar, comprenant un appareil de nettoyage (220, 300) et une unité de commande, dans lequel
l'appareil de nettoyage (220, 300) comprend une buse (223, 304), une tige filetée (306), un moteur (225, 310) et un rail de guidage (309) ;
le moteur (225, 310) est disposé en rotation sur la tige filetée (306), pour entraîner la buse (223, 304) pour un déplacement le long d'une trajectoire définie du rail de guidage (309) ; et l'unité de commande détermine une zone à nettoyer d'une fenêtre lidar sur la base des informations d'emplacement d'un objet de protection sur la fenêtre lidar, dans lequel les informations d'emplacement de l'objet de protection sur la fenêtre lidar comprennent une plage de coordonnées de l'objet de protection sur la fenêtre lidar, et commande l'appareil de nettoyage (220, 300) pour un nettoyage de la zone à nettoyer de la fenêtre lidar ; l'unité de commande détermine une plage de coordonnées de la zone à nettoyer sur la base de la plage de coordonnées de l'objet de protection sur la fenêtre lidar ;
l'unité de commande détermine un paramètre de moteur sur la base de la plage de coordonnées de l'objet de protection sur la fenêtre lidar, dans lequel
le paramètre de moteur est une vitesse de rotation de moteur,
la vitesse de rotation de moteur correspond à une plage de coordonnées horizontales de l'objet de protection sur la fenêtre lidar dans une plage spécifique, et
si la plage de coordonnées horizontales de l'objet de protection est située au centre de la fenêtre lidar, la vitesse de rotation de moteur est réglée sur une petite valeur ;
l'unité de commande commande, sur la base du paramètre de moteur, le moteur (225, 310) pour une rotation et entraîne la buse (223, 304) pour un nettoyage de la zone à nettoyer de la fenêtre lidar.

2. Dispositif lidar selon la revendication 1, dans lequel la plage de coordonnées de la zone à nettoyer est supérieure ou égale à la plage de coordonnées de l'objet de protection sur la fenêtre lidar.

3. Dispositif lidar selon la revendication 1 ou 2, dans lequel le dispositif lidar comprend également une unité de détection (211), et l'unité de détection (211) obtient les informations d'emplacement de l'objet de protection sur la fenêtre lidar.

4. Dispositif lidar selon l'une quelconque des revendications 1 à 3, dans lequel, lorsque le nombre de fois où l'appareil de nettoyage (220, 300) a réalisé un nettoyage continu est inférieur à un premier seuil, l'unité de commande commande l'appareil de nettoyage (220, 300) pour la réalisation d'un nettoyage.

5. Dispositif lidar selon l'une quelconque des revendications 1 à 3, dans lequel le dispositif comprend également une unité émetteur-récepteur, et lorsque le nombre de fois où l'appareil de nettoyage (220, 300) a réalisé un nettoyage continu est supérieur à un premier seuil, l'unité émetteur-récepteur envoie un signal d'alarme à un dispositif de commande de cockpit (240), dans lequel le signal d'alarme est utilisé pour demander une intervention manuelle.

6. Dispositif lidar selon l'une quelconque des revendications 1 à 4, dans lequel, lorsque la durée pendant laquelle l'appareil de nettoyage (220, 300) réalise un nettoyage continu est inférieure à un second seuil, l'unité de commande commande l'appareil de nettoyage (220, 300) pour un nettoyage de la zone à nettoyer de la fenêtre lidar.

7. Dispositif lidar selon l'une quelconque des revendications 1 à 4, dans lequel, lorsque la durée pendant laquelle l'appareil de nettoyage (220, 300) réalise un nettoyage continu est supérieure à un second seuil, l'unité de commande commande la buse (223, 304) pour un déplacement jusqu'à une extrémité du rail de guidage (309), dans lequel l'extrémité du rail de guidage (309) est située en dehors de la portée visible de la fenêtre lidar.

8. Dispositif lidar selon l'une quelconque des revendications 1 à 7, dans lequel le dispositif lidar comprend également un corps lidar (210), le corps lidar (210) comprend une interface réseau de zone de dispositif de commande, et l'appareil de nettoyage (220, 300) comprend également un module de commande de pompe à eau (222) et un module d'entraînement de moteur (226) ; et
l'interface réseau de zone de dispositif de commande est connectée au module de commande de pompe à eau (222) et/ou au module d'entraînement de moteur (226) à travers un bus réseau de zone de dispositif de commande.

9. Procédé de nettoyage lidar, comprenant :
l'obtention d'informations d'emplacement d'un objet de protection sur une fenêtre lidar, dans lequel les informations d'emplacement de l'objet de protection sur la fenêtre lidar comprennent une plage de coordonnées de l'objet de protection sur la fenêtre lidar ;
la détermination de la zone à nettoyer de la fenêtre lidar sur la base des informations d'emplacement de l'objet de protection sur la fenêtre lidar ;
la détermination d'une plage de coordonnées de la zone à nettoyer sur la base de la plage de coordonnées de l'objet de protection sur la fenêtre lidar ;
la détermination d'un paramètre de moteur sur la base de la plage de coordonnées de l'objet de protection sur la fenêtre lidar ;
dans lequel
le paramètre de moteur est une vitesse de rotation de moteur,
la vitesse de rotation de moteur correspond à la plage de coordonnées horizontales de l'objet de protection sur la fenêtre lidar dans une plage spécifique, et
si la plage de coordonnées horizontales de l'objet de protection est située au centre de la fenêtre lidar, la vitesse de rotation de moteur est réglée sur une petite valeur ; et
la commande, sur la base du paramètre du moteur, d'un moteur (225, 310) pour une rotation et l'entraînement de l'appareil de nettoyage (220, 300) pour un nettoyage de la zone à nettoyer de la fenêtre lidar ; et
la commande d'un appareil de nettoyage (220, 300) pour un nettoyage de la zone à nettoyer de la fenêtre lidar.

10. Véhicule intelligent, comprenant au moins un processeur (720) et une mémoire (152, 710), dans lequel l'au moins un processeur (720) est couplé à la mémoire (152, 710), et est configuré pour lire et exécuter des instructions dans la mémoire (152, 710), pour amener le dispositif lidar, selon l'une quelconque des revendications 1 à 8, à réaliser le procédé selon la revendication 9.

11. Véhicule intelligent, comprenant le dispositif lidar selon l'une quelconque des revendications 1 à 8.
